# EUROPÄISCHE PATENTANMELDUNG

(11) **EP 3 939 769 A1**
(43) Veröffentlichungstag der Anmeldung: **19.01.2022**
(21) Anmeldenummer: 21178998.7
(22) Anmeldetag: 11.06.2021
(51) Int. Cl.: B29C 48/91, B29C 35/02, B29C 35/10, B29C 48/09

(54) **VORRICHTUNG ZUM VERBESSERN MINDESTENS EINER PHYSIKALISCHEN EIGENSCHAFT EINES EXTRUDIERTEN KUNSTSTOFFS**

(30) Priorität: 15.07.2020 DE 102020118667
(71) Anmelder: Hans Weber Maschinenfabrik GmbH, 96317 Kronach (DE)
(72) Erfinder: Weber, Johannes, 96317 Kronach (DE)
(74) Vertreter: Schaumburg und Partner Patentanwälte mbB

(57) **Zusammenfassung**

Eine Vorrichtung und ein Verfahren zum Verbessern mindestens einer physikalischen Eigenschaft eines extrudierten Kunststoffs (12) umfassen einen Extruder (14) zum Extrudieren des Kunststoffs sowie eine Lasereinheit (26) mit mindestens einem Laser zum Bestrahlen des extrudierten Kunststoffs (12) mit Laserlicht: Ferner hat die Vorrichtung mindestens einen laserlichtreflektierenden Reflektor (70), der in einem Abstand zum extrudierten Kunststoff (12) angeordnet ist. Der Laser (40, 50, 60) und der Reflektor (70) sind derart angeordnet und ausgebildet, dass das vom Laser (40, 50, 60) emittierte Laserlicht durch den extrudierten Kunststoff (12) hindurch auf Reflektor (70) trifft, der Reflektor (70) das auftreffende Laserlicht (44, 54, 64) derart reflektiert, dass zumindest ein Teil des reflektierten Laserlichts (46, 56, 66) auf den extrudierten Kunststoff (12) trifft.

## Beschreibung

Die Erfindung betrifft eine Vorrichtung und ein Verfahren zum Verbessern mindestens einer physikalischen Eigenschaft eines extrudierten Kunststoffs. Ein solcher extrudierter Kunststoff ist insbesondere ein durch Energiezufuhr vernetzbares Polyolefin. Die Vorrichtung umfasst einen Extruder zum Extrudieren des Kunststoffs.

Extrudierte Polyolefine, wie Polyethylen (PE), werden zur Verbesserung ihrer physikalischen Eigenschaften nach dem Extrudieren im Verarbeitungsprozess vernetzt. Durch eine solche Vernetzung kann insbesondere die Temperaturbeständigkeit der extrudierten Polyolefine verbessert werden. Als Vernetzungsmittel können insbesondere ein oder mehrere Peroxide im Polyethylen eingesetzt werden, die durch Energiezufuhr, insbesondere von Wärmeenergie, den Vernetzungsvorgang durch Temperaturerhöhung auslösen. Zur Zufuhr der erforderlichen Energie werden insbesondere radioaktive Strahlung, Infrarotstrahlung sowie heiße flüssige Salzbäder eingesetzt. Nachteil dieser Verfahren ist es, dass der Umgang mit radioaktiver Strahlung besondere Vorsichtsmaßnahmen erfordert und bei Infrarotstrahlung und den Salzbädern hohe Energieverluste auftreten und bei der Salzbadvernetzung die Wärmeeinbringung nur über Wärmeleitung erfolgt.

Dokument DE 10 2016 122 985 A1 offenbart ein Verfahren zum Herstellen eines polymeren Profils mittels chemischer Vernetzung, wobei ein aus Kunststoffmaterial mit zugesetzten Additiven gefertigtes Kunststoffprofil mit Hilfe eines Lasers erwärmt wird.

Aufgabe der Erfindung ist es, eine Vorrichtung zum Verbessern mindestens einer physikalischen Eigenschaft eines extrudierten Kunststoffs anzugeben, bei dem die Energieeinleitung in den extrudierten Kunststoff relativ einfach und energieeffizient möglich ist.

Diese Aufgabe wird durch eine Vorrichtung mit den Merkmalen des Anspruchs 1 sowie gelöst. Vorteilhafte Weiterbildungen sind in den abhängigen Ansprüchen angegeben.

Durch eine Vorrichtung zum Verbessern mindestens einer physikalischen Eigenschaft eines extrudierten Kunststoffs mit den Merkmalen des Anspruchs 1 wird durch die Lasereinheit mit mindestens einem Laser zum Bestrahlen des extrudierten Kunststoffs mit Laserlicht erreicht, dass die zur Beeinflussung der physikalischen Eigenschaft des extrudierten Kunststoffs erforderliche Energie dem Kunststoff einfach zugeführt werden kann, wobei die Energieverluste bei der Erzeugung von Laserlicht und beim Applizieren des Laserlichts auf den extrudierten Kunststoff durch den Reflektor sehr gering sind und sich die mit Hilfe des Laserlichts dem extrudierten Kunststoff zugeführte Energie einfach und durch den Reflektor auf mehrere Bereiche des extrudierten Kunststoffs applizieren lässt. Dadurch kann die zugeführte Energie abhängig von der Form und der Materialdicke des extrudierten Kunststoffs einfach angepasst werden. Auch kann die zugeführte Energie in Abhängigkeit der Vorschubgeschwindigkeit des extrudierten Kunststoffs einfach eingestellt werden. Besonders vorteilhaft ist es, wenn der vom Extruder extrudierte Kunststoff Polyethylen oder zur Vernetzung vorzugsweise Peroxide umfasst. Allgemein wird der extrudierte Kunststoff aus einem Kunststoffmaterial mit zugesetzten Additiven hergestellt. Die Additive zerfallen durch die durch das Laserlicht bewirkten Wärmezufuhr zu Radikalen, die eine chemische Vernetzung des Kunststoffmaterials bewirken.

Durch die Vorrichtung nach Anspruch 1 erfolgt eine einfache Vernetzung des extrudierten Kunststoffs durch Zuführen von Energie mit Hilfe des Laserlichts, so dass der dann vernetzte extrudierte Kunststoff verbesserte physikalische Eigenschaften hat. Insbesondere hat der vernetzte extrudierte Kunststoff eine höhere Festigkeit bei Zeitstandsinnendruckprüfungen. Hierdurch wird dem gesamten Querschnitt des extrudierten Kunststoffs die zum Ändern der physikalischen Eigenschaft erforderliche Energie zugeführt.

Besonders vorteilhaft ist es, wenn der Reflektor um die Längsachse des extrudierten Kunststoffs herum angeordnet ist. Hierdurch wird sichergestellt, dass das vom Reflektor reflektierte Laserlicht wieder auf den extrudierten Kunststoff trifft.

Ferner ist es vorteilhaft, wenn der Reflektor derart angeordnet ist, dass der extrudierte Kunststoff zwischen reflektierender Oberfläche und dem Laser angeordnet ist. Hierdurch wird sichergestellt, dass das Laserlicht und das reflektierte Laserlicht sicher auf den extrudierten Kunststoff abgestrahlt werden.

Ferner ist es vorteilhaft, wenn der Reflektor derart angeordnet ist, dass der Reflektor in Richtung der Längsachse des extrudierten Kunststoffs eine Ausdehnung hat, die zwischen dem Extruder und einer Kühleinheit angeordnet ist. Hierdurch ist eine sichere und verlustarme Bestrahlung des extrudierten Kunststoffs mit Laserlicht möglich.

Weiterhin ist es vorteilhaft, wenn der Reflektor in Richtung der Längsachse des extrudierten Kunststoffs eine konkav gekrümmte reflektierende Oberfläche hat. Hierdurch wird erreicht, dass ein großer Anteil des reflektierten Laserlichts auch nach nochmaligem Durchstrahlen des extrudierten Kunststoffs in der Reflektoranordnung verbleibt und insbesondere sehr oft, vorzugsweise mindestens 100 Mal und 100.000 Mal in einem Längenabschnitt des extrudierten Kunststoffs im Bereich von 1mm bis 10 cm als reflektiertes Laserlicht auf den extrudierten Kunststoff trifft.

Ferner ist vorteilhaft, wenn der Reflektor durch eine Kühleinheit gekühlt wird. Hierdurch wird eine zu starke Erhitzung des Reflektors verhindert.

Ferner ist es vorteilhaft, wenn der Reflektor mindestens ein bogenförmiges Segment hat. Alternativ kann der Reflektor mehrere bogenförmige Segmente umfassen. Das bogenförmige Segment oder die bogenförmigen Segmente umschließen einen Abschnitt des extrudierten Kunststoffs in einem Winkelbereich im Bereich von 190° bis 360°. Hierbei kann das Segment im Wesentlichen rohrförmig ausgebildet sein und eine vorzugsweise kreisförmige Öffnung haben, durch die der extrudierte Kunststoff hindurchgeführt ist. Sind mehrere Segmente vorgesehen, können die Segmente entlang einer Kreisbahn angeordnet sein und der extrudierte Kunststoff kann innerhalb der Kreisbahn an den Segmenten vorbeigeführt werden. Hierdurch ist eine einfache und effiziente Ausbildung des Reflektors möglich.

Ferner ist es vorteilhaft, wenn der Reflektor mindestens eine Öffnung hat, durch die das vom Laser ermittelte Laserlicht hindurch auf den extrudierten Kunststoff trifft. Hierdurch ist ein einfacher und kompakter Aufbau der Vorrichtung möglich. Ferner ist es hierdurch einfach möglich, dass das Laserlicht auf den Reflektor trifft und von diesem wieder auf den extrudierten Kunststoff trifft.

Ferner ist es vorteilhaft, wenn der oder die Laser derart ausgerichtet und angeordnet sind, dass die Mittelachse des vom Laser ermittelten Laserlichts nicht die Mittelachse des Reflektors trifft. Besonders vorteilhaft ist es, wenn die Mittelachse des vom Laser emittierten Laserlichts gegenüber einem Verlauf der Mittelachse des Laserlichts durch die Mittelachse des Reflektors einen Winkel im Bereich von 0,1° bis 10°, insbesondere in einem Bereich von 1° und 5°, hat. Hierdurch wird sichergestellt, dass keine Totalreflektion des Laserlichts erfolgt und das Laserlicht vom Reflektor wieder zum Laser reflektiert wird.

Alternativ oder zusätzlich ist es vorteilhaft, wenn der Laser derart ausgerichtet und angeordnet ist, dass die Mittelachse des vom Laser emittierten Laserlichts nicht im rechten Winkel zur Mittelachse des Reflektors ausgerichtet sind. Besonders vorteilhaft ist es, wenn die Mittelachse des vom Laser emittierten Laserlichts die Mittelachse des Reflektors in einem Winkel im Bereich von 80° bis 89,9°, insbesondere im Bereich von 85° bis 89°, schneidet. Hierdurch wird sichergestellt, dass keine Totalreflektion des Laserlichts erfolgt und das Laserlicht nicht vom Reflektor wieder zum Laser reflektiert wird.

Weiterhin ist es vorteilhaft, wenn die Lasereinheit mehrere Laser umfasst, wobei die Laser in gleichförmigen Abständen, vorzugsweise entlang einer Kreisbahn, um die Längsachse des extrudierten Kunststoffs herum angeordnet sind. Hierdurch ist eine einfache und effiziente Zufuhr von Laserlicht zu dem extrudierten Kunststoff sowie durch den extrudierten Kunststoff hindurch zum Reflektor möglich. Hierdurch ist eine effiziente Energieausnutzung des Laserlichts zum Erwärmen des extrudierten Kunststoffs möglich.

Es ist vorteilhaft, wenn der Reflektor mehrere Öffnungen hat, wobei jeweils das von einem Laser emittierte Laserlicht durch jeweils eine Öffnung hindurch auf den extrudierten Kunststoff trifft. Die Anzahl der Öffnungen entspricht dabei vorzugsweise der Anzahl der eingesetzten Laser. Hierdurch ist ein einfacher und platzsparender Aufbau der Vorrichtung möglich.

Ferner ist es vorteilhaft, wenn der vom Extruder extrudierte Kunststoff laserlichtabsorbierenden Bestandteile umfasst. Solche laserlichtabsorbierenden Bestandteile sind insbesondere Farbpigmente, wie beispielsweise Ruß. Der extrudierte Kunststoff kann insbesondere Hohlprofil, vorzugsweise ein Rohr oder ein Rechteckprofil, oder ein Vollprofil sein.

Ferner ist es vorteilhaft, wenn die Lasereinheit zum Emittieren von Laserlicht einen kontinuierlichen Laserstrahl erzeugt. Das Laserlicht kann insbesondere elektromagnetische Strahlung im Infrarotbereich, im Bereich des sichtbaren Lichts und/oder im ultravioletten Bereich sein. Besonders vorteilhaft ist es, wenn die Lasereinheit Licht im Bereich von 900 nm bis 1100 nm, insbesondere im Bereich von 940 nm bis 1060 nm, abgibt. Hierbei kann die Lasereinheit ein Wellenlängenspektrum emittieren.

Besonders vorteilhaft ist es, wenn die Intensität und/oder die pro Zeiteinheit abgegebene Menge Laserlicht einfach einstellbar ist. Hierdurch kann dem extrudierten Kunststoff die zum Vernetzen erforderliche Energie einfach zugeführt werden, so dass eine energieeffiziente Bestrahlung des extrudierten Kunststoffs mit Laserlicht möglich ist.

Besonders vorteilhaft ist es, wenn die Lasereinheit zwischen dem Extruder und einer Kühleinheit zum Kühlen des extrudierten Kunststoffs angeordnet ist. Hierdurch hat der extrudierte Kunststoff noch eine relativ hohe Temperatur, so dass die dem extrudierten Kunststoff mit Hilfe der Lasereinheit über das Laserlicht zuzuführende Energie geringer ist als bei auf Raumtemperatur abgekühltem Kunststoff.

Ferner ist es vorteilhaft, wenn der oder die Laser der Lasereinheit und der Reflektor derart angeordnet und ausgebildet sind, dass das Laserlicht in Umfangsrichtung von allen Seiten auf den extrudierten Kunststoff trifft.

Weitere Vorteile und Merkmale ergeben sich aus der nachfolgenden Beschreibung, die eine Ausführungsform in Verbindung mit der beigefügten Figur erläutert.

Es zeigt:
- Fig.1: eine schematische Darstellung einer Anordnung mit einem Extruder und Nachverarbeitungseinheiten zur Herstellung eines Extrusionsprodukts,
- Fig.2: eine schematische Darstellung einer Lasereinheit der Anordnung nach Fig. 1 gemäß einer ersten Ausführungsform,
- Fig.3: eine Schnittdarstellung der Lasereinheit entlang der Schnittlinie A-A nach Fig. 2;
- Fig.4: eine schematische Darstellung einer Lasereinheit der Anordnung nach Fig. 1 gemäß einer zweiten Ausführungsform,
- Fig.5: eine Schnittdarstellung der Lasereinheit entlang der Schnittlinie B-B nach Fig. 4,
- Fig.6: eine schematische Darstellung einer Lasereinheit der Anordnung nach Fig. 1 gemäß einer dritten Ausführungsform,
- Fig.7: eine Schnittdarstellung der Lasereinheit entlang der Schnittlinie C-C nach Fig.6;
- Fig.8: eine schematische Darstellung einer Lasereinheit der Anordnung nach Fig. 1 gemäß einer vierten Ausführungsform, und
- Fig.9: eine Schnittdarstellung der Lasereinheit entlang der Schnittlinie D-D nach Fig. 8.

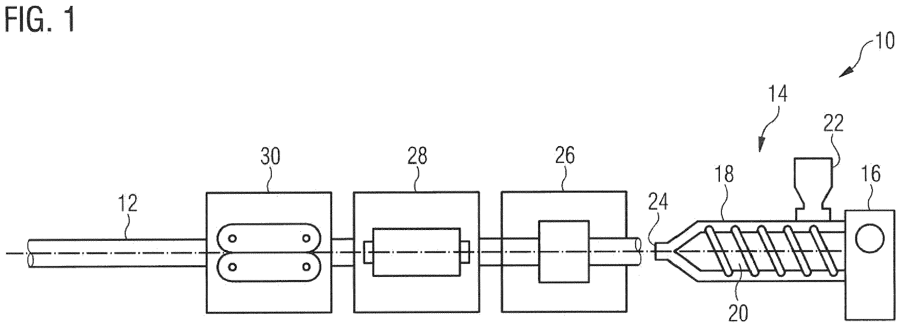

Fig. 1 zeigt eine Anordnung 10 zum Herstellen eines Extrusionsprodukts 12. Die Anordnung 10 umfasst einen Extruder 14, der eine Antriebseinheit 16 zum Antrieb einer oder mehrerer, in einem Zylinder 18 angeordneter Extruderschnecken 20 hat. Über einen Befülltrichter 22 des Extruders 14 wird dem Extruder 14 Kunststoff als Granulat oder in Pulverform zugeführt, das im Extruder 14 durch die Extruderschnecke 20 eingebrachte Energie und zugeführte Wärme zu einer plastischen Masse aufgeschmolzen wird, die dann am Extrusionswerkzeug 24 zum Extrusionsprodukt 12 ausgeformt wird. Das Extrusionsprodukt 12 wird bei dem Extrusionsprozess kontinuierlich aus dem Extrusionswerkzeug 24 herausgedrückt und durchläuft nachfolgend eine Lasereinheit 26, eine Kühlstrecke 28 und eine Abzugseinheit 30, bevor das Extrusionsprodukt 12 nachfolgend in Abschnitte mit einer vorbestimmten Länge getrennt werden kann. Die Lasereinheit 26 bestrahlt das noch durch den Extrusionsprozess im Extruder 14 erwärmte Extrusionsprodukt 12 mit Laserlicht und führt dem extrudierten Kunststoff der Wandung des Extrusionsprodukts 12 so viel Energie zur Massetemperaturerhöhung zu, dass mindestens eine physikalische Eigenschaft des Extrusionsprodukts 12 verbessert wird. Wird als Kunststoff Polyethylen verwendet, kann die Temperaturbeständigkeit des Polyethylens durch Vernetzung mittels Peroxiden durch Massetemperaturerhöhung mittels Energiezufuhr durch die Lasereinheit 26 verbessert werden. Die zur Vernetzung erforderliche Energie wird mit Hilfe des Laserlichts der Lasereinheit 26 dem Kunststoff zugeführt. Das Extrusionsprodukt 12 kann insbesondere ein Hohlprofil, wie beispielsweise ein Rohr oder ein Rechteckprofil sein. Alternativ kann das Extrusionsprodukt auch ein Vollprofil sein.

Nach der Lasereinheit 26 durchläuft das Extrusionsprodukt 12 eine Kühlstrecke 28 zum Abkühlen des Kunststoffs und nachfolgend die Abzugseinheit 30, die den Transport des Extrusionsprodukts 12 vom Extruder 14 weg sicherstellt. Das fertige abgekühlte Extrusionsprodukt 12 kann nach der Abzugseinheit 30 weiterverarbeitet, insbesondere in mehrere Abschnitte zerschnitten und auf einem Stapel abgelegt werden.

Die Lasereinheit 26 kann einen oder mehrere Laser umfassen. Sind mehrere Laser vorgesehen, können diese in gleichförmigen Abständen um die Längsachse des Extrusionsprodukts 12 herum angeordnet sein, vorzugsweise in gleichen Winkelabständen. Zusätzlich oder alternativ können die Laser auch in Richtung der Längsachse in einem Abstand zueinander angeordnet sein.

Gegenüber herkömmlichen thermischen Nachbehandlungsmethoden des extrudierten Kunststoffs, insbesondere mittels radioaktiver Bestrahlung, Infrarotstrahlung sowie heißen, flüssigen Salzbädern, können durch das Laserlicht Energieeinsparungen erzielt und große Wanddicken vernetzt werden.

Besonders vorteilhaft ist es, wenn der Laser Laserlicht im Bereich von 800 nm bis 1200 nm, insbesondere 940 nm bis 1060 nm, abgibt, wobei das Laserlicht monochromatisches Licht ist oder Licht im gesamten Spektrum von 800 nm bis 1200 nm bzw. von 940 nm bis 1060 nm oder in einem Teilbereich abgibt.

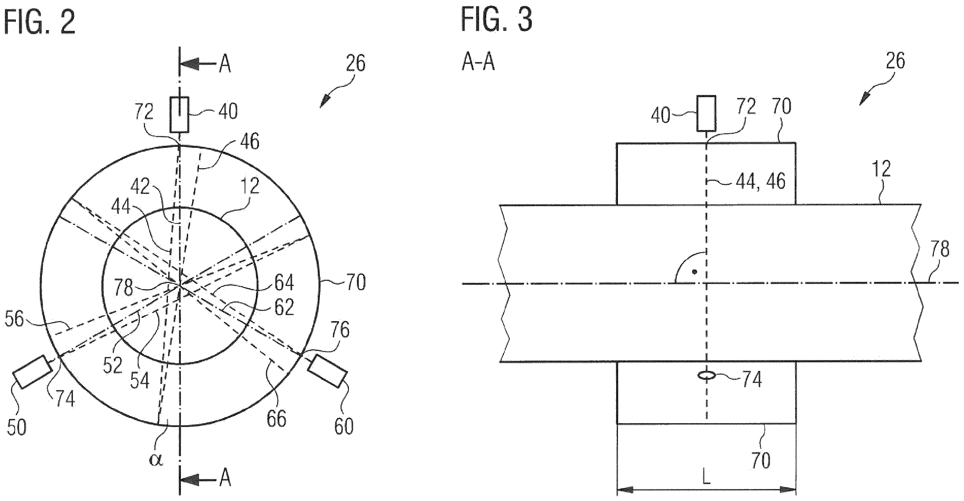

Fig.2 zeigt eine schematische Darstellung einer ersten Ausführungsform der Lasereinheit 26 der Anordnung 10 nach Fig.1 gemäß. Fig.3 zeigt eine Schnittdarstellung der Lasereinheit 26 nach Fig.2 entlang der Schnittlinie A-A. Beim vorliegenden Ausführungsbeispiel hat die Lasereinheit 26 drei Laser 40, 50, 60, die außerhalb eines Reflektors 70 angeordnet sind. Die Mittelachse 78 des Reflektors 70 stimmt mit der Längsachse des Extrusionsprodukts 12, das auch als extrudierter Kunststoff bezeichnet wird, überein. Bei anderen Ausführungsformen können die Mittelachse 78 des Reflektors 70 und die Längsachse des extrudierten Kunststoffs in einem Abstand zueinander angeordnet sein und parallel verlaufen oder sich in einem spitzen Winkel schneiden. Bei anderen Ausführungsformen können insbesondere mehr oder weniger Laser 40, 50, 60 vorgesehen sein.

Die Laser 40, 50, 60 emittieren jeweils einen Laserstrahl 44, 54, 64, der durch das Extrusionsprodukt 12 hindurchtritt und auf den Reflektor 70 trifft und durch diesen reflektiert wird, so dass ein reflektierter Laserstrahl 46, 56, 66 derart reflektiert wird, dass er wiederum durch das Extrusionsprodukt 12 hindurchtritt und anschließend wiederholt vom Reflektor 70 reflektiert wird und wiederholt durch das Extrusionsprodukt 12 hindurchtritt. Das wiederholte Reflektieren des reflektierten Laserlichtstrahls durch den Reflektor 70 und das wiederholte Hindurchtreten durch das Extrusionsprodukt 12 ist aus Übersichtlichkeitsgründen in den Figuren nicht dargestellt worden.

Die Laser 40, 50, 60 sind derart angeordnet, dass sie in einer Ebene senkrecht zur Mittelachse 78 verlaufen, sowohl die durch die Laser direkt emittierten Laserstrahlen 44, 54, 64 als auch die reflektierten Laserstrahlen 46, 56, 66. Die vom Laser 40, 50, 60 emittierten Laserstrahlen 44, 54, 64 weisen jeweils einen Winkel α relativ zu einer durch die Austrittsstelle des emittierten Laserstrahls an dem Laser 40, 50, 60 und durch die Mittellinie 78 verlaufenden Geraden 42, 62, 52 auf. Somit schneiden die Geraden 42, 52, 62 die Mittellinie 78 orthogonal. Der Winkel α hat einen Wert im Bereich von 0,5° und 20°, insbesondere im Bereich zwischen 1° und 10°. Besonders vorteilhaft ist es, wenn der Winkel α einen Wert im Bereich von 2° bis 5° hat. Der Reflektor 70 ist bei der ersten Ausführungsform geschlossen, insbesondere rohrförmig; ausgebildet und hat eine Länge L entlang der Mittelachse 78 bzw. in Transportrichtung des Extrusionsprodukts 12. Bei anderen Ausführungsformen kann der Reflektor auch als mehreren Segmenten zusammengesetzt sein, die um die Mittelachse 78 herum vorzugsweise auf einer Kreisbahn in denselben Winkelabständen, angeordnet sind. Vorzugsweise ist eine ungerade Anzahl von Segmenten vorgesehen. Auch ist es vorteilhaft, eine ungerade Anzahl von Lasern, insbesondere drei, fünf, sieben oder neun Laser40, 50, 60, vorzusehen. Auch die Anzahl der Segmente des Reflektors 70 ist vorzugsweise drei, fünf, sieben oder neun. Hierbei können die Segmente auch eine ungleichmäßige Krümmung aufweisen oder als Flächenelemente ausgebildet sein.

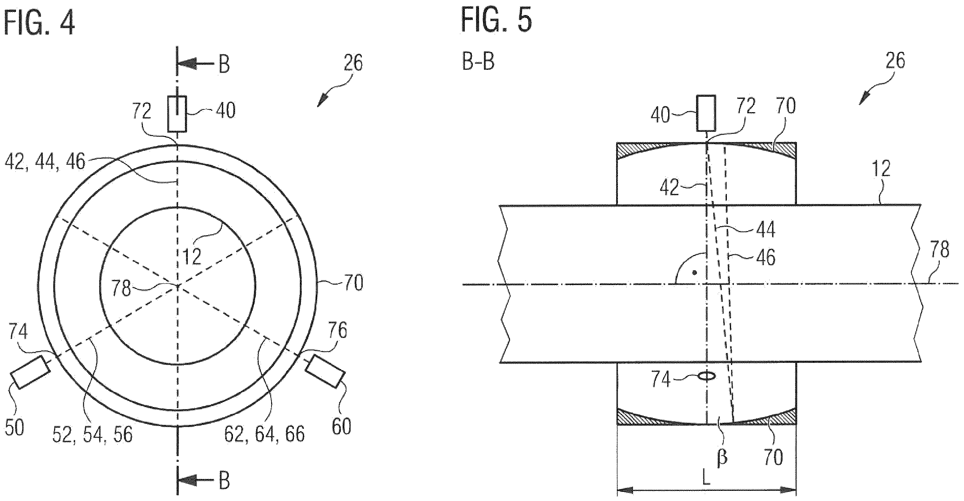

Fig.4 zeigt eine schematische Darstellung einer zweiten Ausführungsform der Lasereinheit 26 der Anordnung nach Fig.1. Elemente mit gleichem Aufbau oder gleicher Funktion haben dieselben Bezugszeichen. Fig.5 zeigt eine Schnittdarstellung der Lasereinheit 26 nach Fig.4 entlang der Schnittlinie B-B.

Im Unterschied zur ersten Ausführungsform nach den Fig.2 und 3 hat der Reflektor 70 bei der zweiten Ausführungsform eine konkav gewölbte reflektierende Oberfläche. Die Lasereinheiten 40, 50, 60 sind derart ausgerichtet, dass sie die Mittellinie 78 des Reflektors 70 schneiden und einen Winkel β einer Geraden zwischen der Austrittsstelle des Laserstrahls 44 und der Mittellinie 78 in einer orthogonalen Ebene zur Mittellinie 78 aufweisen. Die Krümmung der konkaven Oberfläche des Reflektors 70 ist dabei so gewählt, dass die reflektierten Laserstrahlen 46, 56, 66, auch die mehrfach reflektierten Laserstrahlen, im Bereich des Reflektors 70 verbleiben und das Extrusionsprodukt 12 mehrfach, vorzugsweise 100 bis 10.000 Mal durchdringen. Vorzugsweise wird das Extrusionsprodukt 12 kontinuierlich durch die Lasereinheit 26 hindurchtransportiert.

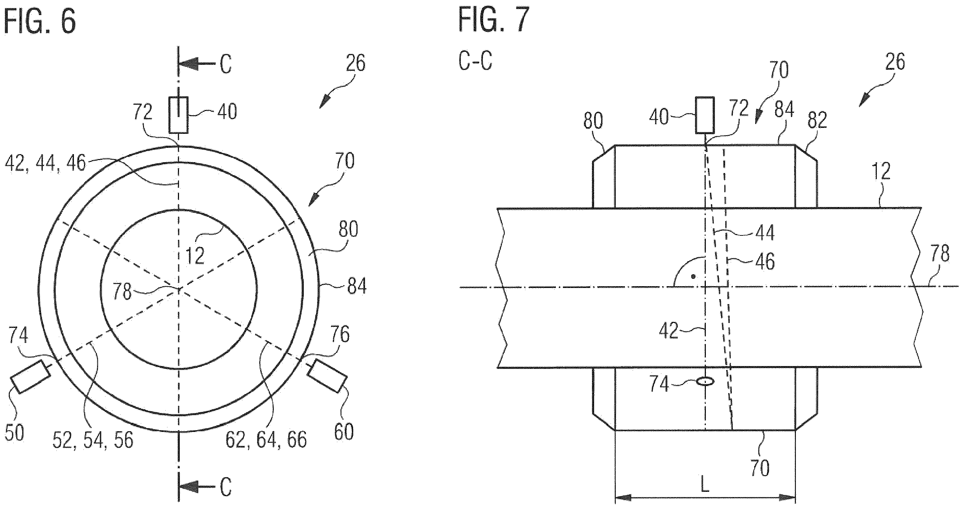

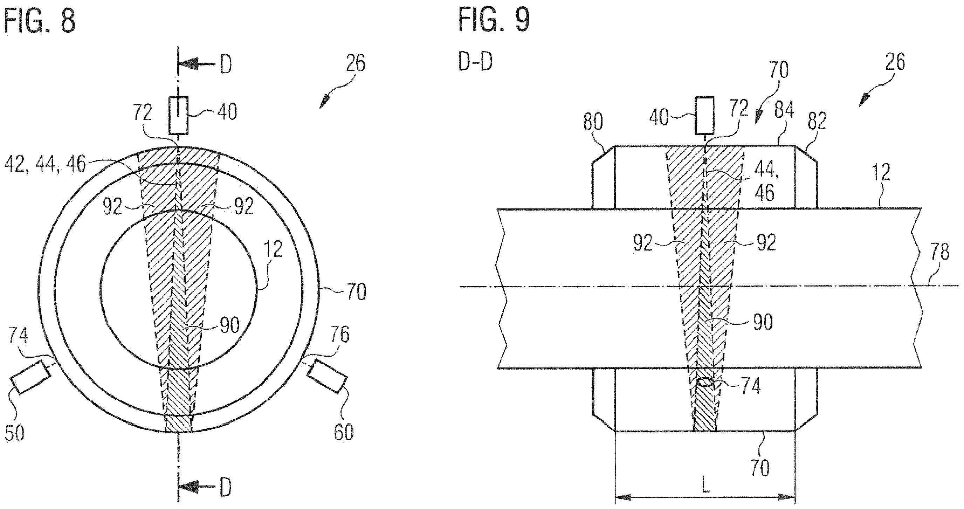

Fig.6 zeigt eine schematische Darstellung einer Lasereinheit 26 der Anordnung 10 nach Fig. 1 gemäß einer dritten Ausführungsform. Fig.7 zeigt eine Schnittdarstellung der Lasereinheit 26 nach Fig.6 entlang der Schnittlinie C-C. Im Unterschied zur ersten Ausführungsform nach den Fig.2 und 3 und zur zweiten Ausführungsform nach den Fig.4 und 5 hat der Reflektor 70 ein erstes zylindrisches Reflektorelement 84, das dem Reflektor gemäß der ersten Ausführungsform entspricht sowie am Eintritt des extrudierten Kunststoffs 12 in den Reflektor 70 hinein einen ersten Reflektorring 82 und am Austritt des extrudierten Kunststoffs aus dem Reflektor 70 einen zweiten Reflektorring 80 aufweist. Die reflektierende Oberfläche der Reflektorringe 80, 82, sind derart angeordnet und ausgerichtet, dass sie vom Reflektorelement 84 reflektiertes Licht, das auf die reflektierenden Oberflächen der Reflektorringe 80, 82 trifft, in Richtung des zylindrischen Reflektorelements 84 reflektieren, d.h. dass sie das auftreffende Laserlicht in Richtung des zylindrischen Reflektorelements 84 reflektieren. Bei der dritten Ausführungsform haben die Reflektorringe 80, 82 schräge reflektierende Oberflächen. Bei anderen Ausführungsformen können die Reflektorringe 80, 82 auch gekrümmte Oberflächen haben, die auftreffendes Licht in Richtung des zylindrischen Reflektorelements 84 reflektieren. Der Strahlenverlauf des Laserlichts bei der dritten Ausführungsform entspricht dem Strahlenverlauf des Laserlichts bei der zweiten Ausführungsform. Es kann bei alternativen Ausführungsformen auch ein Strahlenverlauf des Laserlichts gemäß der ersten Ausführungsform vorgesehen werden oder eine Kombination aus dem Strahlenverlauf des Laserlichts gemäß der ersten Ausführungsform und gemäß der zweiten Ausführungsform. Fig.8 zeigt eine schematische Darstellung einer Lasereinheit 26 der Anordnung 10 nach Fig. 1 gemäß einer vierten Ausführungsform. Fig.9 zeigt eine Schnittdarstellung der Lasereinheit 26 nach Fig. 8 entlang der Schnittlinie D-D. Im Unterschied zur ersten Ausführungsform, zur zweiten Ausführungsform und zur dritten Ausführungsform umfassen bei der vierten Ausführungsform nach Fig.8 und 9 die Lasereinheiten 40, 50, 60 mindestens ein optisches Element zum Streuen der abgegebenen Laserstrahlung, so dass die Laserstrahlung nicht wie bei den ersten drei Ausführungsformen als ein Bündel, sondern als Strahlkegel 90 abgestrahlt wird. Das reflektierte Laserlicht ist in Fig.9 als Strahlkegel 92 dargestellt. Das auf das Reflektorelement 84 auftreffende reflektierte Laserlicht wird vom Reflektorelement 84 und/oder von den Reflektorelementen 80, 82 wieder reflektiert und dringt dabei mehrfach durch das Extrusionsprodukt 12, vorzugsweise 10 bis 10.000 Mal.

Bei allen vier Ausführungsformen kann der extrudierte Kunststoff des Extrusionsprodukts 12 Laserlicht absorbierende Bestandteile, die z.B. Farbpartikel, insbesondere Ruß, umfassen.

Auch bei der ersten, zweiten oder dritten Ausführungsform können Laser 40, 50, 60 eingesetzt werden, die jeweils Laserlicht in einem Strahlkegel 90 abstrahlen. Bei Laserlicht in Form von Strahlkegeln 90, 92 kann die Mittellinie des Strahlkegels auch die Mittellinie in einem rechten Winkel schneiden, da nur ein geringer Teil an Laserstrahlung total reflektiert wird. Jedoch kann die Mittellinie des Strahlkegels auch wie bei der ersten oder zweiten Ausführungsform mit der dort gezeigten Mittellinie 44, 54, 64 des abgestrahlten Laserlichtstrahlbündels übereinstimmen.

Bei anderen Ausführungsformen kann in gleicher Weise wie bei der ersten Ausführungsform auch bei Reflektoren 70 bei einer konkav ausgebildeten Reflektionsoberfläche der Reflektor 70 aus mehreren Segmenten zusammengesetzt sein, vorzugsweise aus einer ungeraden Anzahl von Segmenten. Es können mehr oder weniger als drei Laser 40, 50, 60 vorgesehen sein. Des Weiteren können die Laser 40, 50 und 60 die Laserstrahlen so als Strahlenbündel oder Strahlkegel abstrahlen, dass sie sowohl einen Winkel α zu einer Geraden zwischen der Austrittsstelle des Laserstrahls und der Mittelachse 78 aufweisen als auch einen Winkel β in Richtung der Mittelachse 78 des Reflektors 70.

### Bezugszeichenliste

- 10: Anordnung
- 12: Extrusionsprodukt
- 14: Extruder
- 16: Antriebseinheit
- 18: Zylinder
- 20: Extruderschnecke(n)
- 22: Befülltrichter
- 24: Extrusionswerkzeug
- 26: Lasereinheit
- 28: Kühleinheit
- 30: Abzugseinheit
- 40, 50, 60: Laser
- 42, 52, 62: Gerade zwischen Laserstrahlaustritt Mittelachse Reflektor
- 44, 54, 64: emittierter Laserstrahl
- 46, 56, 66: reflektierter Laserstrahl
- 70: Reflektor
- 72, 74, 76: Öffnung
- 78: Mittelachse Reflektor, Längsachse Extrusionsprodukt
- L: Breite Reflektor
- α, β: Winkel

## Patentansprüche

1. Vorrichtung zum Verbessern mindestens einer physikalischen Eigenschaft eines extrudierten Kunststoffs, insbesondere eines extrudierten, durch Energiezufuhr vernetzbaren Polyolefins,
mit einem Extruder (14) zum Extrudieren des Kunststoffs,
mit einer Lasereinheit (26) mit mindestens einem Laser (40, 50, 60) zum Bestrahlen des extrudierten Kunststoffs (12) mit Laserlicht,
mit mindestens einem laserlichtreflektierenden Reflektor (70), der in einem Abstand zum extrudierten Kunststoff (12) angeordnet ist,
wobei der Laser (40, 50, 60) und der Reflektor (70) derart angeordnet und ausgebildet sind, dass das vom Laser (40, 50, 60) emittierte Laserlicht (44, 54, 64) durch den extrudierten Kunststoff (12) hindurch auf Reflektor (70) trifft, der Reflektor (70) das auftreffende Laserlicht derart reflektiert, dass zumindest ein Teil des reflektierten Laserlichts (46, 56, 66) auf den extrudierten Kunststoff (12) trifft.

2. Vorrichtung nach Anspruch 1, **dadurch gekennzeichnet, dass** der Reflektor (70) um die Längsachse (78) des extrudierten Kunststoffs (12) herum angeordnet ist.

3. Vorrichtung nach einem der vorhergehenden Ansprüche, **dadurch gekennzeichnet, dass** der Reflektor (70) derart angeordnet ist, dass sich der extrudierte Kunststoff (12) zwischen der reflektierenden Oberfläche des Reflektors (70) und dem Laser (40, 50, 60) befindet.

4. Vorrichtung nach einem der vorhergehenden Ansprüche, **dadurch gekennzeichnet, dass** der Reflektor (70) in Richtung der Längsachse (78) des extrudierten Kunststoffs (12) zwischen dem Extruder (14) und einer Kühleinheit (28) angeordnet ist.

5. Vorrichtung nach einem der vorhergehenden Ansprüche, **dadurch gekennzeichnet, dass** der Reflektor (70) derart ausgebildet und angeordnet ist, dass der Reflektor (70) in Richtung der Längsachse (78) des extrudierten Kunststoffs (12) oder entlang der Mittelachse (78) des Reflektors (70) eine konkav gekrümmte reflektierende Oberfläche hat oder dass der Reflektor (70) schräg zur Längsachse (78) des extrudierten Kunststoffs (12) ausgerichtete Reflektorelementen (80, 82) zum Reflektieren zumindest eines Teils des auftreffenden Laserlichts derart auf den extrudierten Kunststoff, dass zumindest ein Teil des aus dem extrudierten Kunststoff (12) wieder austretenden Laserlichts wieder auf den Reflektor (70) trifft, umfasst, wobei vorzugsweise ein erstes Reflektorelement (80) am Eintritt des extrudierten Kunststoffs (12) in den Reflektor (70) und ein zweites Reflektorelement (82) am Austritt des extrudierten Kunststoffs (12) aus dem Reflektor (70) angeordnet ist.

6. Vorrichtung nach einem der vorhergehenden Ansprüche, **dadurch gekennzeichnet, dass** der Reflektor (70) mindestens ein bogenförmiges Segment hat oder mehrere bogenförmige Segmente hat, wobei das bogenförmige Segment oder die bogenförmigen Segmente einen Abschnitt des extrudierten Kunststoffs (12) in einem Winkelbereich im Bereich von 190° bis 360° umschließt, wobei das eine Segment im wesentlichen rohrförmig ist und eine vorzugsweise kreisförmige Öffnung hat, durch die der extrudierte Kunststoff (12) geführt ist oder wobei die Segmente entlang einer Kreisbahn angeordnet sind.

7. Vorrichtung nach einem der vorhergehenden Ansprüche, **dadurch gekennzeichnet, dass** der Reflektor (70) mindestens eine Öffnung (72, 74, 76) hat, wobei das vom Laser (40, 50, 60) emittierte Laserlicht (44, 54, 56) durch die Öffnung hindurch auf den extrudierten Kunststoff (12) trifft.

8. Vorrichtung nach einem der vorhergehenden Ansprüche, **dadurch gekennzeichnet, dass** der Laser (40, 50, 60) derart ausgerichtet und angeordnet ist, dass die Mittelachse (44, 54, 64) des vom Laser (40, 50, 60) emittierten Laserlichts (44, 54, 56) gegenüber einem Verlauf der Mittelachse (42, 52, 62) des Laserlichts durch die Mittelachse (78) des Reflektors (70) einen Winkel im Bereich 0,1° bis 10° hat.

9. Vorrichtung nach einem der vorhergehenden Ansprüche, **dadurch gekennzeichnet, dass** der Laser (40, 50, 60) derart ausgerichtet und angeordnet ist, dass die Mittelachse (44, 54, 64) des vom Laser (40, 50, 60) emittierten Laserlichts die Mittelachse (78) des Reflektors (70) einen Winkel im Bereich von 80° bis 89,9° schneidet.

10. Vorrichtung nach einem der vorhergehenden Ansprüche, **dadurch gekennzeichnet, dass** die Lasereinheit (26) mindestens 2, 3, 4, 5, 6, 7, 8 oder 9 Laser (40, 50, 60) umfasst, wobei die Laser (40, 50, 60) in gleichen Winkelabständen, vorzugsweise entlang einer Kreisbahn, um die Längsachse (78) des extrudierten Kunststoffs (12) oder um die Mittelachse (78) des Reflektors (70) herum angeordnet sind.

11. Vorrichtung nach einem der vorhergehenden Ansprüche, **dadurch gekennzeichnet, dass** der extrudierte Kunststoff an dem Reflektor (70) vorbei bzw. durch einen Reflektorring (84) oder durch mehrere Reflektorringe (80, 82, 84) hindurch gefördert wird.

12. Vorrichtung nach einem der vorhergehenden Ansprüche, **dadurch gekennzeichnet, dass** dem vom Extruder (14) extrudierte Kunststoff (12) dem Kunststoff zugesetzte laserlichtabsorbierenden Bestandteile, insbesondere Farbpigmente, enthält.

13. Vorrichtung nach einem der vorhergehenden Ansprüche, **dadurch gekennzeichnet, dass** der vom Extruder (14) extrudierte Kunststoff (12) ein Hohlprofil, insbesondere ein Rohr, oder ein Vollprofil ist.

14. Vorrichtung nach einem der vorhergehenden Ansprüche, **dadurch gekennzeichnet, dass** die Laser (40, 50, 60) zum Emittieren von Laserlicht einen kontinuierlichen Laserstrahl erzeugt.
